# EUROPÄISCHE PATENTSCHRIFT

(11) **EP 2 196 661 B1**
(45) Veröffentlichungstag und Bekanntmachung des Hinweises auf die Patenterteilung: **25.03.2015**
(21) Anmeldenummer: 09012909.9
(22) Anmeldetag: 13.10.2009
(51) Int. Cl.: F02M 25/07, F02B 29/04, F02G 5/04, F01N 3/28, F01N 5/02, F02B 37/013

(54) **Antriebseinheit mit Kühlkreislauf und separatem Wärmerückgewinnungskreislauf**
Drive unit with cooling circuit and separate heat recovery circuit
Unité d'entraînement dotée d'un circuit de refroidissement et d'un circuit de récupération de chaleur séparé

(30) Priorität: 10.12.2008 AT 19212008
(43) Veröffentlichungstag der Anmeldung: 16.06.2010
(73) Patentinhaber: MAN Truck & Bus Österreich AG, 4400 Steyr (AT)
(72) Erfinder: Raab, Gottfried, 4320 Perg (AT); Klammer, Josef, 9900 Lienz (AT); Raup, Markus, 4800 Attnang-Puchheim (AT)

(56) Entgegenhaltungen:
- EP-A2- 1 905 978
- WO-A1-2004/033859
- DE-A1-102004 006 169
- DE-A1-102006 010 247
- DE-A1-102006 036 122

## Beschreibung

Die Erfindung betrifft eine Antriebseinheit, insbesondere eines Kraftfahrzeugs, mit einer mittels zweier Abgasturbolader zweistufig aufgeladenen Brennkraftmaschine, die über eine einen Niederdruckverdichter, einen Hochdruckverdichter, einen Ladeluftzwischenkühler zwischen Niederdruck- und Hochdruckverdichter sowie einen dem Hochdruckverdichter nachgeschalteten Ladelufthauptkühler aufweisende Ladeluftzufuhr und außerdem über eine Abgasabführung verfügt, welch letztere eine Hochdruckturbine, eine Niederdruckturbine und eine der letzten im Abgastrakt nachgeschaltete Abgasnachbehandlung aufweist, und die außerdem eine Kühlanlage mit einem Kühlkreislauf und einen davon hydraulisch entkoppelten Wärmerückgewinnungskreislauf aufweist.

Die Erfindung geht aus von einer Antriebseinheit gemäß der DE 10 2006 010 247 A1. Wesentliches Merkmal dieser bekannten Antriebseinheit ist, dass deren erster Kühlkreislauf und deren zweiter, als Wärmerückgewinnungskreislauf fungierender zweiter Kühlkreislauf über zumindest einen Wärmeübertrager in thermischem Kontakt stehen. Als Wärmeübertrager sind hierbei z. B. ein AGR-Kühler und ein im Abgastrakt einer Abgasnachbehandlungseinrichtung nachgeordneter Abgas-Wärmetauscher vorgesehen, die in dieser Reihenfolge nacheinander, also in Reihe hintereinander im zweiten Kühlkreislauf angeordnet sind und somit thermisch gekoppelt Wärme an das im zweiten Kühlkreislauf durchströmende Arbeitsmedium übertragen. Das Arbeitsmittel des zweiten Kühlkreislaufes wird beim Durchströmen des AGR-Wärmetauschers und dann des Abgas-Wärmetauschers erhitzt, zumindest partiell in dampfförmigen Aggregatszustand überführt und überhitzt, um dann in einem Expander nutzleistungsbringend verwendet zu werden. Anschließend strömt das Arbeitsmittel im zweiten Kühlkreislauf durch wenigstens einen luftgekühlten Kondensator und dann in wieder verflüssigtem Aggregatzustand durch den Ladelufthauptkühler und Ladeluftzwischenkühler sowie gegebenenfalls weitere Wärmetauscher. Es werden in dieser bekannten Anlage also sowohl die Ladeluft als auch das Motorkühlwasser zusätzlich zum Abgas als Wärmequellen benutzt, die seriell hintereinander geschaltet die Wärme der jeweiligen Medien aufnehmen. Weiterführende Untersuchungen haben gezeigt, dass der Expander erst bei hohen Drücken effektiv arbeitet, die Temperaturen von Ladeluft, Motorkühlmittel und Abgas bei serieller Durchströmung der genannten Wärmetauscher aber nicht ausreichen, um das Arbeitsmittel bei hohen Drücken zu verdampfen. Dabei muss berücksichtigt werden, dass sowohl die zweistufig verdichtete Ladeluft als auch der Verbrennungsmotor hinreichend in allen Leistungsbereichen gekühlt werden müssen, um eine günstige Arbeitsweise des Verbrennungsmotors sicherzustellen, aber auch eine Überhitzung desselben zu vermeiden. Es muss daher dieser Zielsetzung entsprechend bei der bekannten Anlage eine große Menge an Arbeitsmittel durch den zweiten Kühlkreislauf gepumpt werden, mit dem Ergebnis, dass diese Arbeitsmittelmenge auch durch die Wärme der höherwertigen Wärmequellen bei deren Durchströmen nicht vollständig verdampft werden kann, was zwingend ein Abscheidesystem für die Flüssigphase notwendig macht. Außerdem kann aufgrund des vorgenannten Sachverhalts das rückgeführte Abgas bei Durchströmen des/der AGR-Wärmetauscher nicht auf das gewünscht niedrige Temperaturniveau abgekühlt werden, da das Arbeitsmittel bereits vorgewärmt in den/die AGR-Wärmetauscher eintritt.

Es ist daher Aufgabe der Erfindung, die aus der DE 10 2006 010 247 A1 bekannte Antriebseinrichtung und deren Kühlanlage dahingehend zu verbessern, dass eine effiziente Kühlung sowohl des Verbrennungsmotors als auch der Ladeluft und des rückzuführenden Abgases, gleichzeitig aber auch eine hocheffiziente Wärmerückgewinnung durch verbesserte Ausnutzung der Wärmequelle Abgas erzielbar ist.

Diese Aufgabe wird erfindungsgemäß bei einer Antriebseinheit der gattungsgemäßen Art durch die im Kennzeichen des Anspruchs 1 angegebenen Mittel gelöst.

Vorteilhafte Ausgestaltungen diese Lösung sind in den Unteransprüchen gekennzeichnet.

Erfindungsgemäß ist dabei der Antriebseinheit ein spezieller Kühlkreislauf mit zwei Teil-Kühlkreisen und ein davon hydraulisch entkoppelter Wärmerückgewinnungskreislauf zugeordnet. Der Kühlkreislauf ist dabei in zwei Teil-Kühlkreisläufe unterteilt, die entweder hydraulisch miteinander gekoppelt oder hydraulisch getrennt sein können. In diesen Teil-Kühlkreisläufen ist mittels wenigstens einer Pumpe ein Kühlmittel umwälzbar. Dabei sind im ersten Teil-Kühlkreislauf ein von Umgebungsluft kühlbarer Wärmetauscher und im zweiten Teil-Kühlkreislauf ein weiterer von Umgebungsluft kühlbarer Wärmetauscher sowie stromab davon der Ladelufthauptkühler und der Ladeluftzwischenkühler angeordnet. Des Weiteren ist erfindungsgemäß innerhalb des Wärmerückgewinnungskreislaufs mittels wenigstens einer Pumpe eine Drucksteigerung und Umwälzung eines Arbeitsmittels erzielbar und dabei in Wärmetauschern ein Phasenübergang desselben von flüssigem in dampfförmigen Aggregatzustand und zurück herbeiführbar. Dabei wird dieses Arbeitsmittel nach der Pumpe in zwei parallele Teilströme aufgeteilt und dabei in einem ersten Parallelzweig in einem von rückzuführenden Abgas durchströmten AGR-Wärmetauscher sowie in einem im zweiten Parallelzweig von stromab der Niederdruckturbine im Abgasstrang gegebenen Abgas durchströmbaren Abgas-Wärmetauscher in dampfförmigen Aggregatzustand überführt. Dieses dampfförmige Arbeitsmittel wird anschließend einem Expander zugeführt und mittels diesem unter entsprechender Entspannung in mechanische Nutzenergie umgesetzt. Anschließend wird das Arbeitsmittel beim Durchströmen eines gekühlten Kondensators wieder in seinen flüssigen Aggregatzustand überführt sowie mittels der Pumpe erneut in den Wärmerückgewinnungskreislauf eingespeist.

Durch das erfindungsgemäße Konzept der Parallelschaffung der beiden als Verdampfer für das Arbeitsmittel dienenden Wärmetauscher - AGR-Wärmetauscher und Abgas-Wärmetauscher - kann unter Nutzung jeweils einer Wärmequelle sofort Dampf erzeugt werden, zusätzlich tritt das Arbeitsmedium in jeden der beiden Wärmetauscher mit geringer Temperatur ein und erzielt somit auch die gewünschte hocheffiziente Kühlwirkung für das Medium, dem die Wärme entzogen wird (rückgeführtes Abgas und Abgas vor Austritt in die Atmosphäre). Ein weiterer Vorteil besteht darin, dass im Kondensator nur die Wärme des Nutzdampfes abzuführen ist. Die im Wärmerückgewinnungskreislauf in den beiden parallel geschalteten Wärmetauschern verfügbare Abgaswärmeenergie wird somit erfindungsgemäß optimal für die Dampfenergie umgesetzt, die dann mit einem Höchstmaß mittels des Expanders in mechanische Nutzenergie umsetzbar ist. Diese mechanische Energie kann dabei mittels des Expanders z. B. in Rotationsenergie umgesetzt und z. B. der Brennkraftmaschine leistungserhöhend oder einem Generator zur Erzeugung elektrischer Energie zugeführt werden, jeweils mit entsprechend hoher Leistungsausbeute.

Weitere Details, Ausführungsmöglichkeiten und Vorteile der Erfindung ergeben sich aus der nachfolgenden Beschreibung mehrerer Ausführungsbeispiele derselben. Dabei zeigen in der Zeichnung:
- Fig. 1: ein Schema eines ersten Ausführungsbeispiel der Erfindung,
- Fig. 2: ein Schema einer zweiten Ausführungsform der Erfindung,
- Fig. 3: ein Schema einer dritten Ausführungsform der Erfindung,
- Fig. 4: ein Schema einer vierten Ausführungsform der Erfindung,
- Fig. 5: schematisch ein Ausführungsbeispiel einer Ventileinheit zur Verteilung des Arbeitsmittels in die beiden Parallelzweige des Wärmerückgewinnungskreislaufs,
- Fig. 6: schematisch eine Alternative zu der Ventileinheit gemäß Fig. 5,
- Fig. 7: eine Anordnungsvariante für den Abgas-Wärmetauscher im Abgasstrang,
- Fig. 8: eine zu Fig. 7 alternative Anordnung für den Abgas-Wärmetauscher im Abgasstrang,
- Fig. 9: eine zu Fig. 7 und 8 weitere alternative Anordnung für den Abgas-Wärmetauscher im Abgasstrang, und
- Fig. 10: eine zu Fig. 7 bis 9 weitere alternative Anordnung für den Abgas-Wärmetauscher.

In den Figuren sind gleiche oder einander entsprechende Bauteile oder Teile davon des besseren Verständnisses wegen mit gleichen Bezugszeichen angezogen.

Die Erfindung ist einer Antriebseinheit zugeordnet, deren Hauptorgan durch eine Brennkraftmaschine 1 gebildet ist, die wiederum die Antriebsquelle von Kraftfahrzeugen, jedweder Art von Nutzfahrzeugen, Schienenfahrzeugen, Wasserfahrzeugen, aber auch in stationären Anlagen wie Cogeneration Plants, Notstromaggregaten etc. bildet.

Die Brennkraftmaschine 1 ist mittels zweier Abgasturbolader 2, 3 zweistufig aufgeladen. Dabei besteht der die Niederdruckstufe bildende Abgasturbolader 2 aus einer Niederdruckturbine 2/1 und einem von dieser angetriebenen Niederdruckverdichter 2/2. Der die Hochdruckstufe bildende Abgasturbolader 3 besteht aus einer Hochdruckturbine 3/1 und einem von dieser angetriebenen Hochdruckverdichter 3/2.

Die Abgasabführung der Brennkraftmaschine 1 erfolgt über einen Abgasstrang 4 beginnend mit motorseitig abgehenden Krümmern 4a, die mit einem Abgasstrang-Abschnitt 4b kommunizieren, der mit dem Eintritt der Hochdruckturbine 3/1 verbunden ist. Letztere steht über einen Abgasstrang-Abschnitt 4c mit dem Eintritt der Niederdruckturbine 2/1 in Verbindung. Ausgangs der Niederdruckturbine 2/1 schließt sich ein Abgasstrang-Abschnitt 4d an, in dem eine Abgasnachbehandlungsreinrichtung 5 angeordnet sein kann.

Die Ladeluftzufuhr der Brennkraftmaschine 1 besteht aus dem Luft aus der Atmosphäre über einen Filter 6 und Ladeluftleitungs-Abschnitt 7a ansaugenden Niederdruckverdichter 2/2, einem Ladeluftleitungs-Abschnitt 7b zwischen Nieder- und Hochdruckverdichter 2/2, 3/2 mit einem darin angeordneten Ladeluftzwischenkühler 8 sowie einem dem Hochdruckverdichter 3/2 nachgeschalteten Ladelufthauptkühler 9, zu dem ein Ladeluftleitungs-Abschnitt 7c hinführt und von dem ein Ladeluftleitungs-Abschnitt 7d abgeht, der mit den Lufteinlässen 7e der Brennkraftmaschine 1 oder einer Ladeluftsammelleitung 7f kommuniziert, von der die Lufteinlässe 7e abgehen.

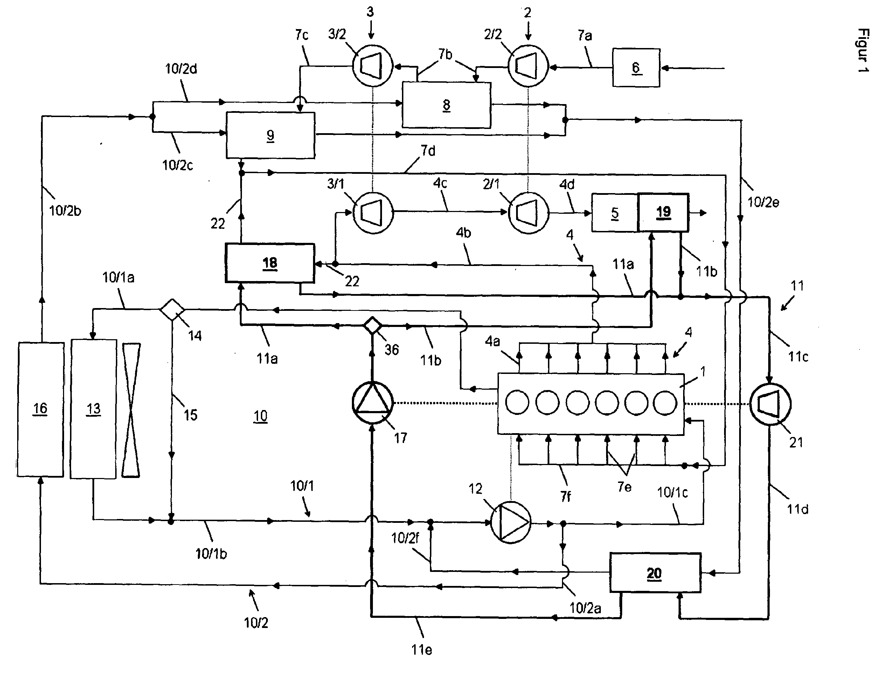

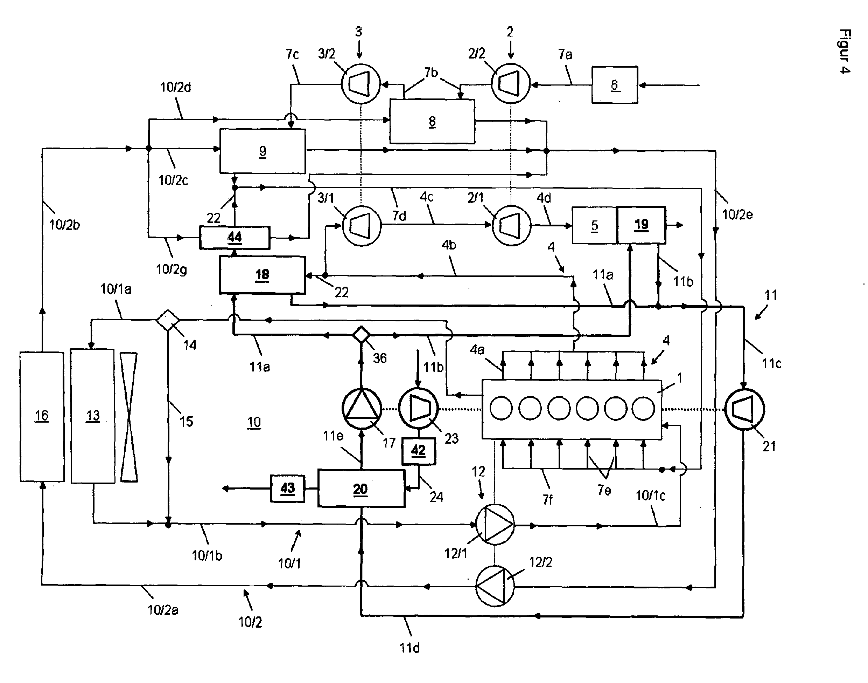

Des Weiteren verfügt die Antriebseinheit gemäß der Erfindung über einen speziell ausgebildeten Kühlkreislauf 10 mit zwei Teil-Kühlkreisläufen 10/1, 10/2 und einen demgegenüber eigenständigen, hydraulisch entkoppelten Wärmerückgewinnungskreislauf 11. Dabei wird innerhalb des Kühlkreislaufs 10 gemäß Fig. 1 bis 3 mittels wenigstens einer Pumpe 12 ein Kühlmittel, z. B. mit Frostschutzmittel gemischtes Wasser, im ersten Teil-Kühlkreislauf 10/1 und dem mit diesem hydraulisch gekoppelten zweiten Teil-Kühlkreislauf 10/2 umgewälzt. In einer weiteren Ausführung der Erfindung können die Teil-Kühlkreisläufe 10/1 und 10/2 auch hydraulisch entkoppelt sein, und in diesen ein Kühlmittel mittels einer Pumpe 12 umgewälzt werden. Im Beispiel gemäß Fig. 4 wird mittels einer zweistufig ausgebildeten Pumpe 12 mit deren Stufen 12/1 und 12/2 Kühlmittel in den Teil-Kühlkreisläufen 10/1 und 10/2 umwälzt, wobei jedem Teil-Kühlkreislauf eine Stufe 12/1 bzw. 12/2 der Pumpe 12 zugeordnet ist. Beim ersten Teil-Kühlkreislauf 10/1 handelt es sich um den Hochtemperatur-Motorkühlkreislauf, in dem ein von Umgebungsluft kühlbarer Wärmetauscher 13 (Hochtemperaturwasserkühler) angeordnet ist, wobei zu letzterem ein vom Kühlmittelauslass der Brennkraftmaschine 1 abgehender Kühlkreislauf-Abschnitt 10/1a und vom Wärmetauscher 13 ein zur Pumpe 12 hinführender Kühlkreislauf-Abschnitt 10/1b abgeht und die Pumpe 12 über einen Kühlkreislauf-Abschnitt 10/1 c mit dem Kühlmitteleinlass der Brennkraftmaschine 1 verbunden ist. In den Kühlkreislauf-Abschnitt 10/1a ist ein Regelglied 14 eingebaut, das über eine Bypassleitung 15 mit dem Kühlkreislauf-Abschnitt 10/1b in Verbindung steht und der Regelung der Durchflussmenge durch den Wärmetauscher 13 dient. In dem zweiten Teil-Kühlkreislauf 10/2, bei dem es sich um einen Niedertemperaturkühlkreis handelt, sind ein weiterer von Umgebungsluft kühlbarer Wärmetauscher 16 (Niedertemperaturwasserkühler) sowie stromab davon der Ladelufthauptkühler 9 und der Ladeluftzwischenkühler 8 angeordnet. Dabei zweigt bei hydraulisch gekoppelten Teil-Kühlkreisläufen 10/1 und 10/2 gemäß den Beispielen von Fig. 1 bis 3 ein Kühlkreislauf-Abschnitt 10/2a strömungsmäßig nach der Pumpe 12 vom Kühlkreislauf-Abschnitt 10/1c des ersten Teil-Kühlkreislaufs 10 ab und führt zum Wärmetauscher 16 hin. Ausgangs des Wärmetauschers 16 schließt sich ein Kühlkreislauf-Abschnitt 10/2b an, in dem der Ladelufthauptkühler 9 und der Ladeluftzwischenkühler 8 entweder in Reihe hintereinander oder - günstiger - in Parallelschaltung in jeweils einem Abschnittsparallelzweig 10/2c bzw. 10/2d angeordnet sind. Strömungsmäßig nach dem Ladeluftzwischenkühler 8 setzt sich der zweite Teil-Kühlkreislauf 10/2 mit einem Abschnitt 10/2e fort, auf dessen Weiterführung weiter hinten noch näher eingegangen ist.

Der erfindungsgemäße Wärmerückgewinnungskreislauf 11 stellt sich wie folgt dar. Im Wärmerückgewinnungskreislauf 11 ist mittels einer Pumpe 17 eine Drucksteigerung und Umwälzung eines Arbeitsmittels erzielbar und dabei in Wärmetauschern 18, 19, 20 ein Phasenübergang desselben von flüssigem in dampfförmigen Aggregatzustand und zurück herbeiführbar. Dabei wird dieses Arbeitsmittel strömungsmäßig nach der Pumpe 17 in zwei parallele Teilströme aufgeteilt und in einem ersten Parallelzweig 11a in einem von rückzuführenden Abgas durchströmten AGR-Wärmetauscher 18 sowie in einem zweiten Parallelzweig 11b von stromab der Niederdruckturbine 2/1 im Abgasstrang-Abschnitt 4d gegebenen Abgas durchströmten Abgas-Wärmetauscher 19 in dampfförmigen Aggregatzustand überführt. Dieses dampfförmige und unter hohem Druck stehende Arbeitsmittel wird dann nach Wiedervereinigung der beiden Parallelzweige 11a, 11b über einen dann gemeinsamen Kreislauf-Abschnitt 11c einem Expander 21 zugeführt und mittels diesem in mechanische Nutzenergie umgesetzt. Anschließend wird das entspannte Arbeitsmittel über einen sich ausgangs des Expanders 21 anschließenden Kreislauf-Abschnitt 11d einem gekühlten Kondensator 20 zugeführt, bei Hindurchleitung durch diesen wieder in seinen flüssigen Aggregatzustand zurückgeführt, anschließend mittels der Pumpe 17 über einen Kreislauf-Abschnitt 11e angesaugt und erneut in den vorbeschriebenen Wärmerückgewinnungskreislauf 11 eingespeist.

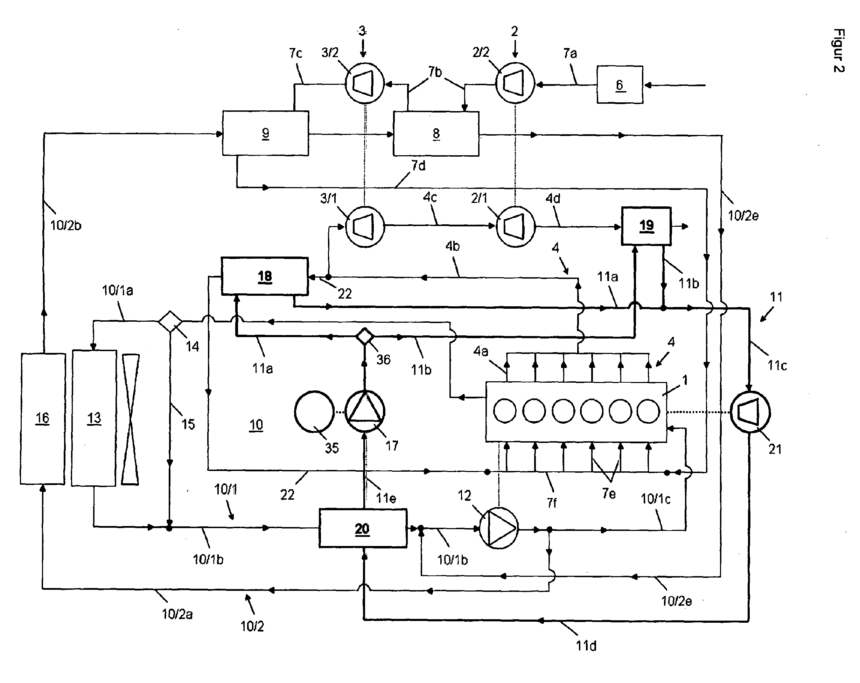

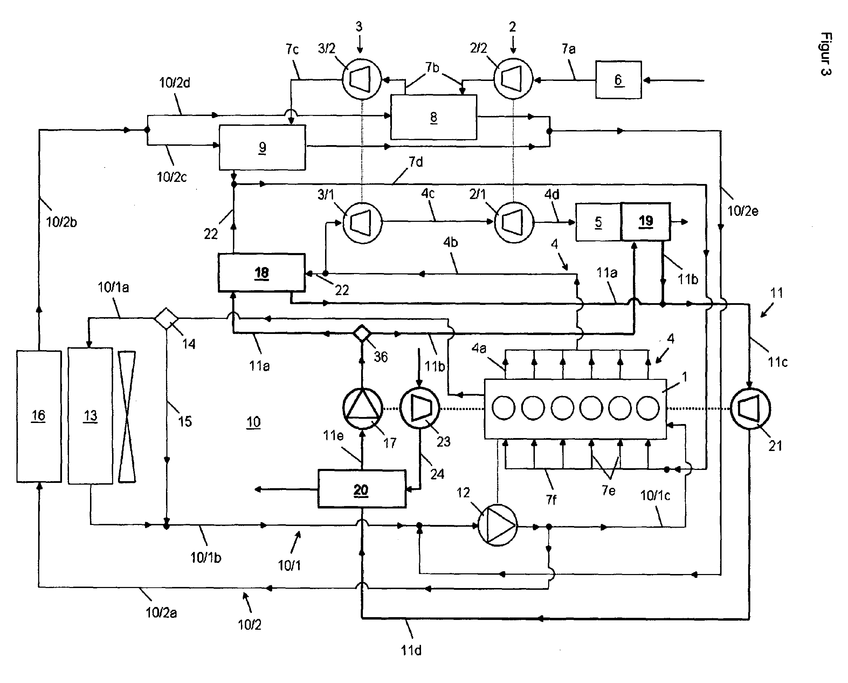

Das den AGR-Wärmetauscher 18 durchströmende rückzuführende Abgas wird dabei strömungsmäßig vor der Hochdruckturbine 3/1 über eine vom Abgasstrang-Abschnitt 4b abzweigende AGR-Leitung 22 dem AGR-Wärmetauscher 18 zugeführt und nach dessen Durchströmung - sowie gegebenenfalls Durchströmung eines weiteren stromab des Wärmetauschers 18 angeordneten Wärmetauschers 44 - in die ausgangs des Ladelufthauptkühlers 9 gegebene Ladeluft eingespeist, wobei die AGR-Leitung 22 strömungsmäßig nach dem AGR-Wärmetauscher 18 bzw. nach dem weiteren Wärmetauscher 44 (soweit dieser vorhanden ist) entweder in jenen Ladeluftleitungsabschnitt 7d einmündet, der die Verbindung zwischen Ladelufthauptkühler 9 und den brennkraftmaschinenseitigen Lufteinlässen 7e bzw. der Ladeluftsammelleitung 7f herstellt (siehe Fig. 1 und 3) oder direkt zu den Lufteinlässen 7e der Brennkraftmaschine bzw. einer Ladeluftsammelleitung 7f, von der die Lufteinlässe 7e abgehen, zurückgeführt ist (siehe Fig. 2).

Nachstehend ist auf unterschiedliche Ausgestaltungen und Verschaltungen der erfindungsgemäßen Kreisläufe unter Bezugnahme auf die einzelnen Zeichnungen näher eingegangen.

Bei der Ausführungsvariante gemäß Fig. 1 ist der Kondensator 20 des Wärmerückgewinnungskreislaufs 11 zu seiner Kühlung in den zweiten Teil-Kühlkreislauf 10/2 eingeschaltet, wobei der Leitungsabschnitt 10/2e zum Kondensator 20 hinführt. Ausgang des letzteren setzt sich der zweite Teil-Kreislauf 10/2 mit einem Leitungsabschnitt 10/2f fort und mündet mit diesem strömungsmäßig bzw. saugseitig vor der Pumpe 12 wieder in den ersten Teil-Kühlkreislauf 10/1, dort dessen Leitungsabschnitt 10/1b ein. Als Medium zum Abkühlen und Wiederverflüssigen des Arbeitsmittels im Kondensator 20 dient hier demnach das Kühlmittel des niedertemperaturigen Teilkühlkreislaufes 10/2, nachdem es in den beiden vorzugsweise parallel geschalteten Ladeluftkühlern 8, 9 die Wärme des Ladeluftstromes aufgenommen hat. Die im Kondensator 20 abgeführte Wärme belastet zwar das Kühlsystem der Brennkraftmaschine 1, allerdings wird ein Teil der aufgenommenen Wärme wieder in mechanische Energie umgesetzt und nur ein gewisser Anteil ins Kühlsystem eingebracht. Mit Hilfe ausgereifter Regelungssysteme kann somit das Motor-Kühlsystem entweder - insbesondere bei hohen Umgebungstemperaturen - entlastet, oder neutral gehalten, oder - insbesondere bei Kühlpotentialüberschuss bei niedrigen Umgebungstemperaturen - zusätzlich belastet werden.

Bei der Ausführungsvariante gemäß Fig. 2 ist der Kondensator 20 zu seiner Kühlung in den ersten Teil-Kühlkreislauf 10/1 eingeschaltet und zwar in jenen Leitungsabschnitt 10/1b zwischen Hochtemperatur-Wärmetauscher 13 und Pumpe 12, der von gekühltem Kühlmittel durchflossen wird. Der zweite Teil-Kühlkreislauf 10/2 mündet in diesem Fall mit seinem Leitungsabschnitt 10/2e strömungsmäßig bzw. saugseitig vor der Pumpe 12 aber nach dem Kondensator 20 in den ersten Teil-Kühlkreislauf 10/1, dort dessen Leitungsabschnitt 10/1b ein.

Als Medium zum Abkühlen und Wiederverflüssigen des Arbeitsmittels im Kondensator 20 dient hier das Kühlmittel des hochtemperaturigen Teil-Kühlkreislaufes 10/1, nachdem dieses den Hochtemperatur-Wärmetauscher 13 durchflossen hat. Diese Variante bedingt, dass gegenüber Fig. 1 bei höheren Temperaturen und mit höheren Drücken kondensiert werden muss, allerdings ist das System in diesem Fall durch die höheren Durchflussmengen unempfindlicher gegen Überhitzung bei dynamischen Drehzahl- und Lastwechseln.

Bei der Variante gemäß Fig. 3 wird zur Kühlung des Kondensators 20 bzw. zum Abkühlen und Verflüssigen des diesen durchströmenden Arbeitsmittels verdichtete Luft verwendet, die mittels eines Luft aus der Atmosphäre ansaugenden zusätzlichen Verdichters oder Gebläses 23 erzeugbar und dem Kondensator 20 über eine Zuleitung 24 zuführbar ist. Der Verdichter bzw. das Gebläse 23 kann von der Brennkraftmaschine 1 über einen entsprechenden Getriebegang bzw. Antriebsstrang her oder alternativ durch einen Elektromotor angetrieben sein.

Bei der Ausführungsvariante gemäß Fig. 4 befindet sich gegenüber Fig. 3 in der Zuleitung 24 stromauf des Kondensators 20 und/oder stromab des letzteren wenigstens ein weiterer Wärmeübertrager 42, 43. Abhängig vom erforderlichen Temperaturniveau eines Kühlluftstroms ist mit der verdichteten Luft, die mittels eines Luft aus der Atmosphäre ansaugenden zusätzlichen Verdichters oder Gebläses 23 erzeugbar ist, eine weitere Kühlungswirkung beispielsweise für einen Klimakondensator herbeiführbar. Gegenüber den Varianten in Fig. 1 bis Fig. 3 zeigt Fig. 4 die Ausführung der hydraulisch entkoppelten Teil-Kühlkreisläufe 10/1, 10/2, in denen durch jeweils wenigstens eine zugeordnete Stufe 12/1, 12/2 der Pumpe 12 ein Kühlmittel umwälzbar ist. Des Weiteren zeigt Fig. 4 eine spezielle Anordnung des weiteren Wärmetauschers 44, der hydraulisch in einem Parallelstrom 10/2g zu den die Ladeluftkühler 8, 9 durchströmenden Zweige 10/2d, 10/2c des zweiten Teil-Kühlkreislaufs 10/2 geschaltet ist. Abgasseitig kann somit das durch die AGR-Leitung 22 strömende Abgas nach Verlassen des AGR-Verdampfers 18 mittels des weiteren Wärmetauschers 44 auf ein niedrigeres Temperaturniveau abgekühlt werden.

Was die Anordnung des Abgas-Wärmetauschers 19 anbelangt, so sind hierfür in den Figuren 1 bis 4 und 7 bis 10 verschiedene Möglichkeiten aufgezeigt.

Aus Fig. 2 ist eine Ausführungsform ersichtlich, bei der der Abgaswärmetauscher 19 nahe zur Niederdruckturbine 2/1 hingerückt in dem sich an letzterer anschließenden Abgasstrang-Abschnitt 4d - dort die Restwärme des die Turbine 2/1 verlassenden Abgases nutzend - angeordnet ist.

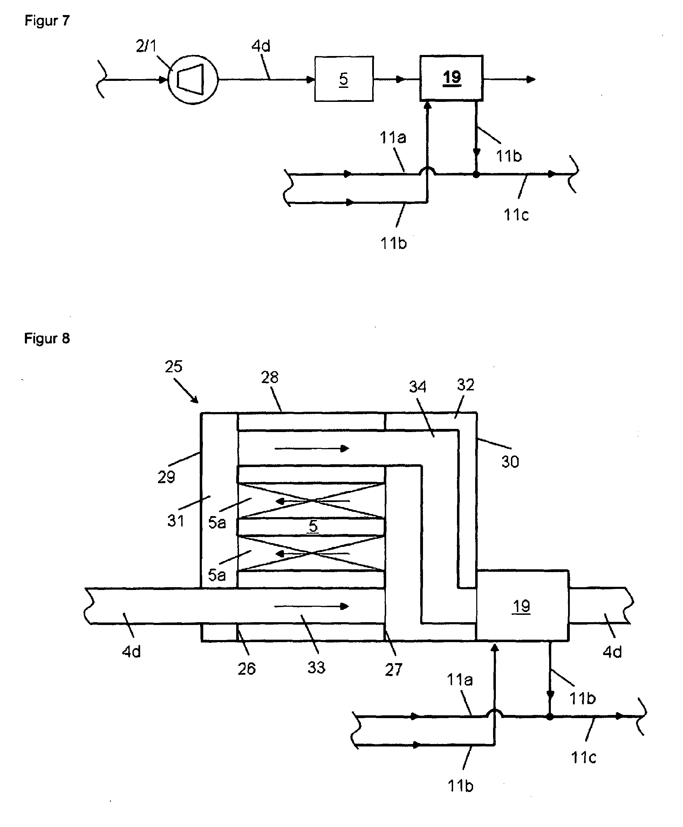

Aus Fig. 1, 3 und 4 ist eine Ausführungsform ersichtlich, bei der der Abgas-Wärmetauscher 19 in dem sich an den Ausgang der Niederdruckturbine 2/1 anschließenden Abgasstrang-Abschnitt 4d, dort stromab einer Abgasnachbehandlungseinrichtung 5, die Restwärme des diese nach Durchströmung verlassenden Abgases nutzend, angeordnet ist. Dabei sind die Abgasnachbehandlungseinrichtung 5 und der Abgas-Wärmetauscher 19 unmittelbar hintereinander angeordnet. Im Fall der Variante gemäß Fig. 7 ist der Abgas-Wärmetauscher 19 etwas beabstandet von der Abgasnachbehandlungseinrichtung 5 im Abgasstrang-Abschnitt 4d angeordnet. Fig. 8 zeigt eine bestimmte Ausführungsform einer Abgasnachbehandlungseinrichtung 5 sowie die Zuordnung des Abgas-Wärmetauschers 19 hierzu. Dabei sind mehrere Abgasnachbehandlungsmodule 5a der Abgasnachbehandlungseinrichtung 5 in einem Schalldämpfer 25 eingebaut und dort parallel durchströmbar zwischen zwei Wänden 26, 27 in Einbaulage gehalten. Der Schalldämpfer 25 ist radial außen durch eine beispielsweise zylindrische Mantelwand 28 und vorn sowie hinten durch je einen Boden 29, 30 begrenzt. Die beiden Wände 26, 27 sind parallel zu den Böden 29, 30 angeordnet. Die Wand 26 begrenzt zusammen mit dem vorderen Boden 29 einen Abgasauslassraum 31 und die Wand 27 mit dem hinteren Boden 30 einen Abgaseinlassraum 32. In den Abgaseinlassraum 32 mündet ein Einlassstutzen 33, der ein Teil des Abgasstrang-Abschnitts 4d bildet und Abgas in den Einlassraum 32 einleitet. Dieses Abgas durchströmt dann zu seiner Reinigung die Abgasnachbehandlungsmodule 5a und wird dann über ein schalldämpferinternes Endrohr 34 aus dem Auslassraum 31 und dem Schalldämpfer 25 ausgeleitet, um dann anschließend den in diesem Beispiel unmittelbar außen am Schalldämpfer 25 angebauten Abgas-Wärmetauscher 19 zu durchströmen. Letzterer ist dabei am hinteren Boden 30 des Schalldämpfers 25 befestigt.

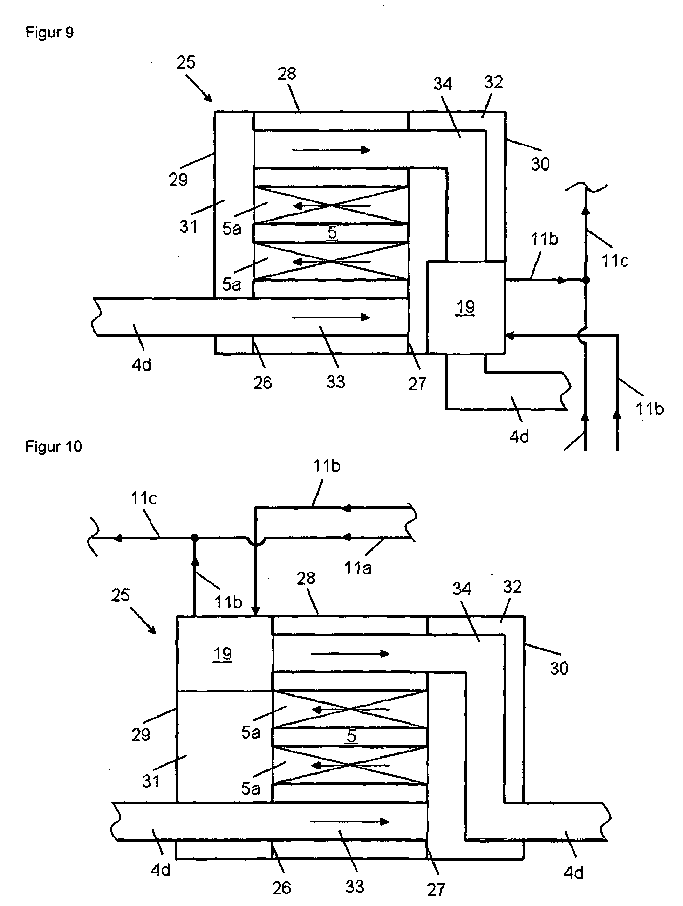

Beim Ausführungsbeispiel gemäß Fig. 9 kommt der im Prinzip gleich wie jener von Fig. 8 ausgebildete Schalldämpfer 25 mit den integrierten Abgasnachbehandlungsmodulen 5a zur Anwendung, jedoch ist in diesem Fall der Abgas-Wärmetauscher 19 nicht außen am Schalldämpfer 25, sondern innen in diesem angeordnet. Dabei erfolgt die Zu- und Ableitung des Abgases zum Abgas-Wärmetauscher 19 über das Endrohr 34. Der Abgaswärmetauscher 19 kann dabei an oder im Endrohr 34 oder an der Innenseite des Bodens 30 oder des Außenmantels 28 befestigt sein. Alternativ zu dieser Anordnung im Einlassraum 32 kann der Abgas-Wärmetauscher 19 aber auch - wie aus Fig. 10 ersichtlich - im Abgasauslassraum 31, dort an einer Stelle angeordnet sein, die ein Einströmen des gereinigten Abgases nicht behindert. Ausgangs des Abgas-Wärmetauschers 19 wird das gereinigte Abgas über das Endrohr 34 aus dem Schalldämpfer 25 abgeführt.

Nachfolgend ist auf verschiedene weitere Details des Wärmerückgewinnungskreislaufs 11 näher eingegangen.

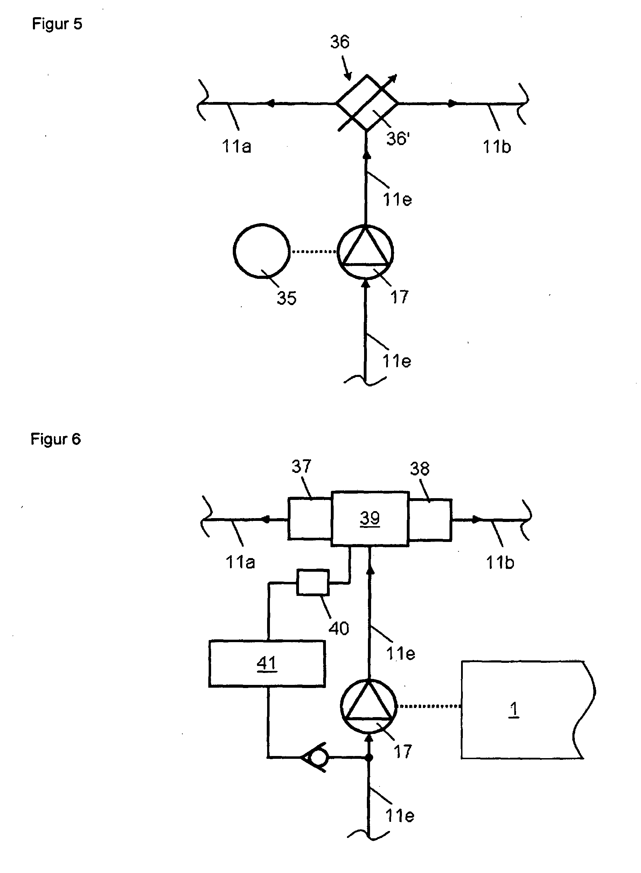

Die Pumpe 17 kann entweder mechanisch von der Brennkraftmaschine 1 her über einen Getriebezug oder Triebsstrang angetrieben sein (siehe Fig. 1 und 3). Alternativ kann die Pumpe 17 aber auch von einem Elektromotor 35 angetrieben sein (siehe Fig. 2). Mittels der Pumpe 17 wird das Arbeitsmittel im Wärmerückgewinnungskreislauf 11 zu der Ventileinheit 36 gefördert, von der die beiden Parallelzweige 11a, 11b abgehen. Mittels der Ventileinheit 36 werden unabhängig vom zur Verfügung stehenden Wärmeangebot zwei Arbeitsmittel-Massenströme in die beiden Parallelzweige 11a, 11b generiert, die zudem voneinander und von der Drehzahl der Brennkraftmaschine 1 oder des Elektromotors 35 unabhängig regelbar sind. Bei elektromotorischem Antrieb der Pumpe 17 besteht die Ventileinheit 36 - wie aus Fig. 5 ersichtlich - z. B. aus einem Mischventil, das den von der Pumpe 17 eingesteuerten Arbeitsmittelmassenstrom geregelt in zwei, in die beiden Parallelzweige 11a, 11b einzuleitende Massen-Teilströme aufteilt. Bei mechanischem Antrieb der Pumpe 17 von der Brennkraftmaschine her kann die Ventileinheit 36 - wie aus Fig. 6 ersichtlich - z. B. aus zwei Stromregelventilen 37, 38, einem Druckspeicher 39 und einem Druckbegrenzungsventil 40 bestehen, wobei mittels jedem Stromregelventil 37 bzw. 38 dem Druckspeicher 39 der dem anschließenden Parallelzweig 11a bzw. 11b zuzuführende Arbeitsmittel-Massenteilstrom entnommen wird. Dabei fördert die Pumpe 17 abhängig von der Drehzahl der Brennkraftmaschine 1 Arbeitsmittel in den Druckspeicher 39. Die überschüssige Arbeitsmittelmenge wird über das Druckbegrenzungsventil 40 in einen Ausgleichsbehälter 41 abgesteuert. In jedem Fall werden mit der Ventileinheit 36 zwei Arbeitsmittel-Teilströme generiert, über die sich die im AGR-Wärmetauscher 18 und Abgas-Wärmetauscher 19 generierbaren Dampfmengen und Dampfdrücke variabel einstellen lassen.

Das im Wärmerückgewinnungskreislauf 11 verwendete Arbeitsmittel oder zumindest eine Komponente desselben weist eine auf einen effizienten Betrieb des Wärmekrückgewinnungskreislaufs abgestimmte Verdampfungstemperatur auf. Als Arbeitsmittel kann Wasser oder ein Wasser-Gemisch verwendet werden, wobei der letzterem zugesetzte Stoff Eigenschaften wie beispielsweise Korrosionsschutz und Frostschutz erfüllen kann. Alternativ ist als Arbeitsmittel eine Kohlenwasserstoffverbindung mit niedriger Siede- bzw. Verdampfungstemperatur verwendbar. Besonders geeignet erscheinen hierbei Butan- sowie Pentanverbindungen. Eine Aufstellung möglicher Arbeitsmedien mit deren für die Erfindung wesentlichen physikalischen bzw. chemischen Eigenschaften ist der nachfolgenden Tabelle zu entnehmen:

| **Medium** | **Molmasse** | **Kritischer Punkt** | | **Siede-temperatur (10⁵ Pa)** | **Verdampfungs-wärme (10⁵ Pa)** | **Steigung der Sattdampfkurve** | **Zerset-zung bei ca.** |
|---|---|---|---|---|---|---|---|
| NH3 | 17 | 405,3 K | 11,33 MPa | 239,7 K | 1347 kJ/kg | Negativ | 750 K |
| Wasser | 18 | 647,0 K | 22,06 MPa | 373,0 K | 2256 kJ/kg | Negativ | - |
| n-Butan C4H10 | 58,1 | 425,2 K | 3,80 MPa | 272,6 K | 383,8 kJ/kg | - | - |
| n-Pentan C5H12 | 72,2 | 469,8 K | 3,37 MPa | 309,2 K | 357,2 kJ/kg | - | - |
| C6H6 | 78,14 | 562,2 K | 4,90 MPa | 353,0 K | 438,7 kJ/kg | Positiv | 600 K |
| C7H8 | 92,1 | 591,8 K | 4,10 MPa | 383,6 K | 362,5 kJ/kg | Positiv | - |
| R134a (HFC-134a) | 102 | 374,2 K | 4,06 MPa | 248,0 K | 215,5 kJ/kg | Isentrop | 450 K |
| C8H10 | 106,1 | 616,2 K | 3,50 MPa | 411,0 K | 339,9 kJ/kg | Positiv | - |
| R12 | 121 | 385,0 K | 4,13 MPa | 243,2 K | 166,1 kJ/kg | Isentrop | 450 K |
| HFC-245fa | 134,1 | 430,7 K | 3,64 MPa | 288,4 K | 208,5 kJ/kg | - | - |
| HFC-245ca | 134,1 | 451,6 K | 3,86 MPa | 298,2 K | 217,8 kJ/kg | - | - |
| R11 (CFC-11) | 137 | 471,0 K | 4,41 MPa | 296,2 K | 178,8 kJ/kg | Isentrop | 420 K |
| HFE-245fa | 150 | 444,0 K | 3,73 MPa | - | - | - | - |
| HFC-236fa | 152 | 403,8 k | 3,18 MPa | 272,0 K | 168,8 kJ/kg | - | - |
| R123 | 152,9 | 456,9 K | 3,70 MPa | 301,0 K | 171,5 kJ/kg | Positiv | - |
| CFC-114 | 170,9 | 418,9 K | 3,26 MPa | 276,7 K | 136,2 kJ/kg | - | - |
| R113 | 187 | 487,3 K | 3,41 MPa | 320,4 K | 143,9 kJ/kg | Positiv | 450 K |
| n-Perfluoro-Pentan C5F12 | 288 | 420,6 K | 2,05 MPa | 302,4 K | 87,8 kJ/kg | - | - |

Das verwendete Arbeitsmittel wird im Wärmerückgewinnungskreislauf innerhalb des AGR-Wärmetauschers 18 und des Abgas-Wärmetauschers 19 jeweils vollständig von flüssigem in dampfförmigen Aggregatzustand umgewandelt. Durch die Wärmeübertragung im AGR-Wärmetauscher 18 wird dabei einerseits eine hocheffiziente Kühlung des rückzuführenden Abgases und andererseits eine vollständige Verdampfung des Arbeitsmittels bewirkt. Durch die Wärmeübertragung im Abgas-Wärmetauscher 19 wird einerseits für eine möglichst effiziente Abkühlung des durchströmenden Abgases und andererseits auch hier für eine vollständige Verdampfung des Arbeitsmittels gesorgt. Das ausgangs der beiden als Verdampfer fungierenden Wärmetauscher 18, 19 in dampfförmigen Aggregatzustand vorliegende Arbeitsmittel wird dann in den Expander 19 eingeleitet und von diesem in mechanische Nutzenergie umgesetzt. Bei dem Expander 19 kann es sich z. B. um eine Wärmekraftmaschine oder eine Turbinenanlage handeln, mit der die im verdampften Arbeitsmittel entfallene Energie zumindest teilweise in nutzleistungsbringende Rotationsenergie umsetzbar ist und die zur Einleitung der erzeugten Nutzenergie z. B. mit der Brennkraftmaschine oder einem Strom erzeugenden Generator oder anderen Leistungsabnehmern entweder direkt oder über einen Triebstrang bzw. Getriebezug in Verbindung steht.

Es wird mit der erfindungsgemäßen Lösung somit einerseits eine hocheffiziente Kühlung der Brennkraftmaschine 1 sowie der dieser zuzuführenden Ladeluft und des rückzuführenden Abgases erzielt, andererseits aber auch die Wärmeenergie des Abgases in höchstem Maße nutzbringend an verschiedenen Stellen ausgenützt, zum einen um mechanische Zusatzleistung zu erzeugen, und zum anderen um die bei gleicher Leistungsabgabe in der Brennkraftmaschine 1 verbrannte Kraftstoffmenge zu minimieren und dadurch die Umweltbelastung zu reduzieren.

## Patentansprüche

1. Antriebseinheit, insbesondere eines Kraftfahrzeugs, mit einer mittels zweier Abgasturbolader (2, 3) zweistufig aufgeladenen Brennkraftmaschine (1), die
- über eine einen Niederdruckverdichter (2/2), einen Hochdruckverdichter (3/2), einen Ladeluftzwischenkühler (8) zwischen Niederdruck- und Hochdruckverdichter (2/2, 3/2) sowie einen dem Hochdruckverdichter (3/2) nachgeschalteten Ladelufthauptkühler (9) aufweisende Ladeluftzufuhr verfügt, außerdem
- über eine Abgasabführung mit einer Hochdruckturbine (3/1) und einer Niederdruckturbine (2/1) und gegebenenfalls einer der letzteren (2/1) im Abgastrakt (4) nachgeschalteten Abgasnachbehandlungseinrichtung (5) verfügt, ferner
- eine Kühlanlage mit einem Kühlkreislauf (10) und einem davon hydraulisch entkoppelten Wärmerückgewinnungskreislauf (11) aufweist,
**dadurch gekennzeichnet**,
dass der Kühlkreislauf (10) zwei hydraulisch gekoppelte oder entkoppelte Teil-Kühlkreisläufe (10/1, 10/2) umfasst und in diesen mittels wenigstens einer Pumpe (12) ein Kühlmittel umwälzbar ist,
dass im ersten Teil-Kühlkreislauf (10/1) ein von Umgebungsluft kühlbarer Wärmetauscher (13) und im zweiten Teil-Kühlkreislauf (10/2) ein weiterer von Umgebungsluft kühlbarer Wärmetauscher (16) sowie stromab davon der Ladelufthauptkühler (9) und der Ladeluftzwischenkühler (8) angeordnet sind,
dass innerhalb des Wärmerückgewinnungskreislaufs (11) ein Arbeitsmittel durch wenigstens eine Pumpe (12) druckgesteigert umwälzbar ist und dabei in Wärmetauschern (18, 19, 20) ein Phasenübergang desselben von flüssigem in dampfförmigen Aggregatzustand und zurück herbeiführbar ist, wobei dieses Arbeitsmittel nach der Pumpe (17) in zwei parallele Teilströme aufgeteilt in einem ersten Parallelzweig (11a) in einem von rückzuführenden Abgas durchströmten AGR-Wärmetauscher (18) und in einem im zweiten Parallelzweig (11b) von stromab der Niederdruckturbine (2/1) im Abgasstrang (4d) gegebenen Abgas durchströmten Abgas-Wärmetauscher (19) in dampfförmigen Aggregatzustand überführbar ist, dann dieses dampfförmige Arbeitsmittel einem Expander (21) zuführbar sowie mittels diesem in mechanische Nutzenergie umsetzbar ist, anschließend durch einen gekühlten Kondensator (20) hindurch leitbar und dann in wieder flüssigem Aggregatzustand mittels der Pumpe (17) erneut in den vorgenannten Kreislauf einspeisbar ist.

2. Antriebseinheit nach Anspruch 1, **dadurch gekennzeichnet, dass** der AGR-Wärmetauscher (18) über eine AGR-Leitung (22) mit rückzuführendem Abgas versorgbar ist, die von einem die auslassseitigen Krümmer (4a) der Brennkraftmaschine (1) mit dem Einlass der Hochdruckturbine (3/1) verbindenden Abgastraktabschnitt (4b) abzweigt.

3. Antriebseinheit nach Anspruch 2, **dadurch gekennzeichnet, dass** das rückzuführende Abgas über die AGR-Leitung (22) dem AGR-Wärmetauscher (18) zuführbar und nach Durchströmen desselben in jenen Ladeluftleitungsabschnitt (7d) einleitbar ist, der die Verbindung zwischen Ladelufthauptkühler (9) und den brennkraftmaschinenseitigen Lufteinlässen (7e) bzw. einer Ladeluftsammelleitung (7f) herstellt, von der die Lufteinlässe (7e) abgehen.

4. Antriebseinheit nach Anspruch 2, **dadurch gekennzeichnet, dass** in der AGR-Leitung (22) stromab des AGR-Wärmetauschers (18) wenigstens ein weiterer Wärmetauscher (44) angeordnet ist, der vom Kühlmittel eines weiteren parallel zu den Zweigen (10/2d, 10/2c) des zweiten Teil-Kühlkreislaufs (10/2) verlaufenden Zweiges (10/2g) durchströmbar ist und somit nach dem AGR-Wärmetauscher (18) eine weitere Abkühlung des durch die AGR-Leitung (22) strömenden Abgases bewirkt, und dass das rückzuführende Abgas nach Durchströmen auch des Wärmetauschers (44) über die AGR-Leitung (22) in jenen Ladeluftleitungsabschnitt (7d) einleitbar ist, der die Verbindung zwischen Ladelufthauptkühler (9) und den brennkraftmaschinenseitigen Lufteinlässen (7e) bzw. einer Ladeluftsammelleitung (7f) herstellt, von der die Lufteinlässe (7e) abzweigen.

5. Antriebseinheit nach Anspruch 2, **dadurch gekennzeichnet, dass** das rückzuführende Abgas über die AGR-Leitung (22) dem AGR-Wärmetauscher (18) zuführbar und nach Durchströmen desselben zu den Lufteinlässen (7e) der Brennkraftmaschine (1) bzw. einer Ladeluftsammelleitung (7f) rückführbar ist, von der die Lufteinlässe (7e) abgehen.

6. Antriebseinheit nach Anspruch 1, **dadurch gekennzeichnet, dass** der Abgas-Wärmetauscher (19) nahe zur Niederdruckturbine (2/1) hingerückt in dem sich an letztere anschließenden Abgasstrang-Abschnitt (4d) - dort die Restwärme des die besagte Turbine (2/1) verlassenden Abgases nutzend - angeordnet ist.

7. Antriebseinheit nach Anspruch 1, **dadurch gekennzeichnet, dass** der Abgas-Wärmetauscher (19) in dem sich an den Ausgang der Niederdruckturbine (2/1) anschließenden Abgasstrang-Abschnitt (4d), dort stromab einer Abgasnachbehandlungseinrichtung (5) die Restwärme des diese nach Durchströmung verlassenden Abgases nutzend, angeordnet ist.

8. Antriebseinheit nach Anspruch 7, **dadurch gekennzeichnet, dass** die Abgasnachbehandlungseinrichtung (5) und der Abgas-Wärmetauscher (19) unmittelbar hintereinander im Abgasstrang-Abschnitt (4d) angeordnet sind.

9. Antriebseinheit nach Anspruch 7, **dadurch gekennzeichnet, dass** der Abgas-Wärmetauscher (19) nach der Abgasnachbehandlungseinrichtung (5) etwas beabstandet von dieser im Abgasstrang-Abschnitt (4d) angeordnet ist.

10. Antriebseinheit nach Anspruch 7, **dadurch gekennzeichnet, dass** die Abgasnachbehandlungseinrichtung (5) aus mehreren Abgasnachbehandlungsmodulen (5a) besteht, die in einen Schalldämpfer (25) integriert sind und sich dort zwischen einer Abgaseintrittskammer (32) und einer Abgasaustrittskammer (31) erstrecken, dass der Abgaseintrittskammer (32) Abgas über einen Einlassstutzen (33) zuführbar ist, der ein Teil des sich ausgangs der Niederdruckturbine (2/1) anschließenden Abgasstrang-Abschnitts (4b) bildet, dass das nach Durchströmen der Abgasnachbehandlungsmodule (5a) gereinigte Abgas aus der Abgasaustrittskammer (32) über ein Endrohr (34) aus dem Schalldämpfer (25) ausleitbar ist, und dass der Abgas-Wärmetauscher (19) entweder innerhalb oder außerhalb des Schalldämpfers (25) angeordnet ist.

11. Antriebseinheit nach Anspruch 10, **dadurch gekennzeichnet, dass** der Abgas-Wärmetauscher (19) außen am Schalldämpfer (25) befestigt und diesem (19) eingangsseitig Abgas über das Endrohr (34) zuführbar ist.

12. Antriebseinheit nach Anspruch 10, **dadurch gekennzeichnet, dass** der Abgas-Wärmetauscher (19) innerhalb des Schalldämpfers (25), dort innerhalb von dessen Abgaseinlassraum (32) angeordnet ist und diesem (19) eingangsseitig Abgas über das Endrohr (34) zuführbar ist.

13. Antriebseinheit nach Anspruch 10, **dadurch gekennzeichnet, dass** der Abgas-Wärmetauscher (19) innerhalb des Schalldämpfers (25), dort innerhalb von dessen Abgasauslasskammer (31) angeordnet ist, und dass das Abgas nach Durchströmen des Abgas-Wärmetauschers (19) über das Endrohr (34) aus dem Schalldämpfer (23) ausleitbar ist.

14. Antriebseinheit nach Anspruch 1, **dadurch gekennzeichnet, dass** der Kondensator (20) zu seiner Kühlung entweder in den ersten oder zweiten Teil-Kühlkreislauf (10/1) bzw. (10/2) eingeschaltet ist und solchermaßen das jeweils darin umgewälzte Kühlmittel zur Rückkühlung und Verflüssigung des ebenfalls den Kondensator (20) durchströmenden Arbeitsmittels des Wärmerückgewinnungskreislaufs (11) heranziehbar ist.

15. Antriebseinheit nach Anspruch 14, **dadurch gekennzeichnet, dass** der Kondensator (20) in jenem Leitungsabschnitt (10/2e) des zweiten Teil-Kühlkreises (10/2) angeordnet ist, der
- bei kühlmittelseitiger Reihenschaltung von Ladelufthauptkühler (9) und Ladeluftzwischenkühler (8) dessen Ausgang, oder
- bei kühlmittelseitiger Parallelschaltung von Ladelufthauptkühler (9) und Ladeluftzwischenkühler (8) deren beide Ausgänge vereinigt
entweder mit dem Eingang der Pumpe (12) oder einer saugseitig davor gegebenen Einleitstelle in den den Ausgang des Wärmetauschers (13) mit der Pumpe (12) verbindenden Leitungsabschnitt (10/1 b) des ersten Teils-Kühlkreislaufes (10) verbindet.

16. Antriebseinheit nach Anspruch 14, **dadurch gekennzeichnet, dass** der Kondensator (20) in jenem Leitungsabschnitt (10/1 b) des ersten Teil-Kühlkreislaufs (10/1) angeordnet ist, der den Ausgang des Wärmetauschers (13) mit dem Eingang der Pumpe (12) verbindet.

17. Antriebseinheit nach Anspruch 16, **dadurch gekennzeichnet, dass** dann, wenn der Kondensator (20) in den Leitungsabschnitt (10/1b) des ersten Teil-Kühlkreislaufes (10/1) eingeschaltet ist, der zweite Teil-Kühlkreislauf (10/2) mit seinem Leitungsabschnitt (10/2a) von dem zur Brennkraftmaschine (1) hinführenden Leitungsabschnitt (10/1b) stromab der Pumpe (12) abzweigt und mit seinem Leitungsabschnitt (10/2e) wieder in jenem Teil des Leitungsabschnitts (10/1 b) des ersten Teil-Kreislaufes (10/1) einmündet, der den Ausgang des Kondensators (20) mit der Pumpe (12) verbindet.

18. Antriebseinheit nach Anspruch 1, **dadurch gekennzeichnet, dass** dem Kondensator (20) als Kühlmittel verdichtete Luft zuführbar ist, die mittels eines Luft aus der Atmosphäre ansaugenden Verdichters oder Gebläses (23) erzeugbar ist, der bzw. das entweder von der Brennkraftmaschine (1) her über einen entsprechenden Getriebezug oder Triebstrang oder alternativ hierzu durch einen Elektromotor antreibbar ist.

19. Antriebseinheit nach Anspruch 18, **dadurch gekennzeichnet, dass** in der Zuleitung (24) stromauf des Kondensators (20) und/oder stromab des letzteren in einer Leitung wenigstens ein weiterer mit Luft durchströmbarer Wärmetauscher (42, 43) angeordnet ist, mit dem durch die verdichtete Luft eine weitere Kühlungswirkung erzielbar ist.

20. Antriebseinheit nach Anspruch 1, **dadurch gekennzeichnet, dass** die Pumpe (17) des Wärmerückgewinnungskreislaufs (11) mechanisch von der Brennkraftmaschine (1) her antreibbar ist.

21. Antriebseinheit nach Anspruch 1, **dadurch gekennzeichnet, dass** die Pumpe (17) des Wärmerückgewinnungskreislaufs (11) durch einen Elektromotor (35) antreibbar ist.

22. Antriebseinheit nach Anspruch 1, **dadurch gekennzeichnet, dass** das Arbeitsmedium im Wärmerückgewinnungskreislauf (11) mittels der Pumpe (17) zu einer Ventileinheit (36) förderbar ist, von der die beiden Parallelzweige (11 a, 11 b) abgehen, und dass mittels der Ventileinheit (36) unabhängig vom zur Verfügung stehenden Wärmeangebot zwei Arbeitsmittel-Massenströme in die beiden Parallelzweige (11a, 11b) generierbar und diese zudem voneinander sowie der Drehzahl der Brennkraftmaschine bzw. des Elektromotors unabhängig regelbar sind.

23. Antriebseinheit nach den Ansprüchen 21 und 22, **dadurch gekennzeichnet, dass** die Ventileinheit (36) bei elektromotorischem Antrieb der Pumpe (17) aus einem Mischventil (36') besteht, das den von der Pumpe (17) eingesteuerten Arbeitsmittel-Massenstrom geregelt in zwei, in die beiden Parallelzweige (11a, 11b) einzuleitenden Massen-Teilströme aufteilt.

24. Antriebseinheit nach den Ansprüchen 20 und 22, **dadurch gekennzeichnet, dass** die Ventileinheit (36) bei mechanischem Antrieb der Pumpe (17) von der Brennkraftmaschine (1) her aus zwei Stromregelventilen (37, 38), einem Druckspeicher (39) und einem Druckbegrenzungsventil (40) besteht, wobei mittels der Pumpe (17) Arbeitsmittel abhängig von der Drehzahl der Brennkraftmaschine (1) in den Druckspeicher (39) förderbar ist, mittels des Druckbegrenzungsventils (40) überschüssiges Arbeitsmittel in einen Ausgleichsbehälter (41) absteuerbar ist und mittels jedes Stromregelventils (37 bzw. 38) dem Druckspeicher (39) ein Arbeitsmittel-Teilstrom entnehmbar und dem anschließenden Parallelzweig (11 a, 11 b) zuführbar ist.

25. Antriebseinheit nach Anspruch 23, **dadurch gekennzeichnet, dass** als Arbeitsmittel im Wärmerückgewinnungskreislauf (11) Wasser oder ein Wasser-Gemisch verwendet werden, wobei der letzterem zugesetzte Stoff Eigenschaften wie beispielsweise Korrosionsschutz und Frostschutz beeinflussen kann.

26. Antriebseinheit nach Anspruch 1, **dadurch gekennzeichnet, dass** als Expander (21) eine Wärmekraftmaschine oder Turbinenanlage vorgesehen ist, mit der die im verdampften Arbeitsmittel enthaltene Energie zumindest teilweise in Rotationsenergie umsetzbar ist, die wiederum als Nutzleistung wirksam verwendbar ist.

27. Antriebseinheit nach Anspruch 26, **dadurch gekennzeichnet, dass** der Expander (21) mit der Brennkraftmaschine (1) oder einem Strom erzeugenden Generator oder einem anderen Aggregat in nutzleistungsabnehmender Wirkverbindung steht, wobei diese Wirkverbindung direkt oder indirekt über einen Triebstrang oder Getriebezug zu einer anzutreibenden Welle des betreffenden Aggregats hergestellt ist.

## Claims

1. Drive unit, in particular of a motor vehicle, with an internal combustion engine (1) charged in two stages by means of two exhaust gas turbochargers (2, 3), which drive unit has
- a charge-air supply having a low-pressure compressor (2/2), a high-pressure compressor (3/2), a charge-air intermediate cooler (8) between the low-pressure and the high-pressure compressor (2/2, 3/2) and a main charge-air cooler (9) following the high-pressure compressor (3/2), also has
- an exhaust-gas discharge with a high-pressure turbine (3/1) and a low-pressure turbine (2/1) and, if appropriate, with an exhaust-gas treatment device (5) following the latter (2/1) in the exhaust tract (4), and furthermore has
- a cooling system with a cooling circuit (10) and with a heat recovery circuit (11) decoupled hydraulically from the latter,
**characterized**
in that the cooling circuit (10) comprises two hydraulically coupled or decoupled cooling subcircuits (10/1, 10/2) and a coolant can be circulated in these by means of at least one pump (12),
in that a heat exchanger (13) coolable by ambient air is arranged in the first cooling subcircuit (10/1) and a further heat exchanger (16) coolable by ambient air and also, downstream of this, the main charge-air cooler (9) and the charge-air intermediate cooler (8) are arranged in the second cooling subcircuit (10/2),
in that a working medium can be circulated within the heat recovery circuit (11) with increased pressure by at least one pump (12) and at the same time a phase transition of the said working medium from the liquid to the vaporous state of aggregation and back again can be brought about in heat exchangers (18, 19, 20), this working medium being divided downstream of the pump (17) into two parallel substreams and being transferrable into the vaporous state of aggregation, in a first parallel branch (11a), in an EGR heat exchanger (18), through which exhaust gas to be recirculated flows, and in an exhaust-gas heat exchanger (19) through which, in the second parallel branch (11 b), exhaust gas introduced downstream of the low-pressure turbine (2/1) in the exhaust tract (4d) flows, this vaporous working medium then being deliverable to an expander (21) and being convertible by means of the latter into mechanical useful energy, subsequently being conductible through a cooled condenser (20) and then, again in the liquid state of aggregation, being feedable anew into the abovementioned circuit by means of the pump (17).

2. Drive unit according to Claim 1, **characterized in that** the EGR heat exchanger (18) can be supplied with exhaust gas to be recirculated via an EGR line (22) which branches off from an exhaust-tract section (4b) connecting the outlet-side manifold (4a) of the internal combustion engine (1) to the inlet of the high-pressure turbine (3/1).

3. Drive unit according to Claim 2, **characterized in that** the exhaust gas to be recirculated can be delivered via the EGR line (22) to the EGR heat exchanger (18) and, after flowing through the latter, can be introduced into that charge-air line section (7d) which makes the connection between the main charge-air cooler (9) and the internal combustion engine-side air inlets (7e) or a charge-air collecting line (7f) from which the air inlets (7e) emanate.

4. Drive unit according to Claim 2, **characterized in that** there is arranged in the EGR line (22), downstream of the EGR heat exchanger (18), at least one further heat exchanger (44), through which can flow the coolant of a further branch (10/2g) running parallel to the branches (10/2d, 10/2c) of the second cooling subcircuit (10/2) and which thus gives rise, downstream of the EGR heat exchanger (18), to further cooling of the exhaust gas flowing through the EGR line (22), and **in that** the exhaust gas to be recirculated, after also flowing through the heat exchanger (44), can be introduced via the EGR line (22) into that charge-air line section (7d) which makes the connection between the main charge-air cooler (9) and the internal combustion engine-side air inlets (7e) or a charge-air collecting line (7f) from which the air inlets (7e) branch off.

5. Drive unit according to Claim 2, **characterized in that** the exhaust gas to be recirculated can be delivered via the EGR line (22) to the EGR heat exchanger (18) and, after flowing through the latter, can be recirculated to the air inlets (7e) of the internal combustion engine (1) or a charge-air collecting line (7f) from which the air inlets (7e) emanate.

6. Drive unit according to Claim 1, **characterized in that** the exhaust-gas heat exchanger (19), moved near to the low-pressure turbine (2/1), is arranged in the exhaust-tract section (4d) following the latter, so as there to utilize the residual heat of the exhaust gas leaving the said turbine (2/1).

7. Drive unit according to Claim 1, **characterized in that** the exhaust-gas heat exchanger (19) is arranged in the exhaust-tract section (4d) following the outlet of the low-pressure turbine (2/1), so as there to utilize, downstream of an exhaust-gas treatment device (5), the residual heat of the exhaust gas leaving the latter after flowing through it.

8. Drive unit according to Claim 7, **characterized in that** the exhaust-gas treatment device (5) and the exhaust-gas heat exchanger (19) are arranged directly in succession in the exhaust-tract section (4d).

9. Drive unit according to Claim 7, **characterized in that** the exhaust-gas heat exchanger (19) is arranged downstream of the exhaust-gas treatment device (5), so as to be spaced apart somewhat from the latter, in the exhaust-tract section (4d).

10. Drive unit according to Claim 7, **characterized in that** the exhaust-gas treatment device (5) is composed of a plurality of exhaust-gas treatment modules (5a) which are integrated into a silencer (25) and extend there between an exhaust-gas inflow chamber (32) and an exhaust-gas outflow chamber (31), **in that** exhaust gas can be delivered to the exhaust-gas inflow chamber (32) via an inlet connection piece (33) which forms part of the exhaust-tract section (4b) following the outlet of the low-pressure turbine (2/1), **in that** the exhaust gas purified after flowing through the exhaust-gas treatment modules (5a) can be discharged from the exhaust-gas outflow chamber (32) out of the silencer (25) via an end pipe (34), and **in that** the exhaust-gas heat exchanger (19) is arranged either inside or outside the silencer (25).

11. Drive unit according to Claim 10, **characterized in that** the exhaust-gas heat exchanger (19) is fastened to the outside of the silencer (25) and exhaust gas can be delivered to the exhaust-gas heat exchanger (19) on the inlet side via the end pipe (34).

12. Drive unit according to Claim 10, **characterized in that** the exhaust-gas heat exchanger (19) is arranged inside the silencer (25), inside its exhaust-gas inlet space (32) there, and exhaust gas can be delivered to the said exhaust-gas heat exchanger (19) on the inlet side via the end pipe (34).

13. Drive unit according to Claim 10, **characterized in that** the exhaust-gas heat exchanger (19) is arranged inside the silencer (25), inside its exhaust-gas outlet chamber (31) there, and **in that** the exhaust gas, after flowing through the exhaust-gas heat exchanger (19), can be discharged out of the silencer (23) via the end pipe (34).

14. Drive unit according to Claim 1, **characterized in that** the condenser (20), for its cooling, is inserted either into the first or into the second cooling subcircuit (10/1) or (10/2), and in this way the coolant in each case circulated therein can be utilized for recooling and condensing the working medium, likewise flowing through the condenser (20), of the heat recovery circuit (11).

15. Drive unit according to Claim 14, **characterized in that** the condenser (20) is arranged **in that** line section (10/2e) of the second cooling subcircuit (10/2) which
- in the case of a coolant-side series connection of the main charge-air cooler (9) and charge-air intermediate cooler (8), connects the outlet of the latter or
- in the case of a coolant-side parallel connection of the main charge-air cooler (9) and charge-air intermediate cooler (8), connects their two outlets
combined either to the inlet of the pump (12) or to an introduction point, provided upstream of the latter on the suction side, into that line section (10/1b) of the first cooling subcircuit (10) which connects the outlet of the heat exchanger (13) to the pump (12).

16. Drive unit according to Claim 14, **characterized in that** the condenser (20) is arranged **in that** line section (10/1b) of the first cooling subcircuit (10/1) which connects the outlet of the heat exchanger (13) to the inlet of the pump (12).

17. Drive unit according to Claim 16, **characterized in that**, if the condenser (20) is inserted into the line section (10/1b) of the first cooling subcircuit (10/1), the second cooling subcircuit (10/2) branches off with its line section (10/2a), downstream of the pump (12), from the line section (10/1b) leading to the internal combustion engine (1) and issues again with its line section (10/2e) **in that** part of the line section (10/1b) of the first subcircuit (10/1) which connects the outlet of the condenser (20) to the pump (12).

18. Drive unit according to Claim 1, **characterized in that** compressed air can be delivered as coolant to the condenser (20) and can be generated by means of a compressor or blower (23) which sucks in air from the atmosphere and which can be driven either by the internal combustion engine (1) via a corresponding gear train or drive train or, alternatively thereto, by means of an electric motor.

19. Drive unit according to Claim 18, **characterized in that** at least one further heat exchanger (42, 43), through which air can flow and by means of which a further cooling action can be achieved by the compressed air, is arranged in the supply line (24) upstream of the condenser (20) and/or downstream of the latter in a line.

20. Drive unit according to Claim 1, **characterized in that** the pump (17) of the heat recovery circuit (11) can be driven mechanically from the internal combustion engine (1).

21. Drive unit according to Claim 1, **characterized in that** the pump (17) of the heat recovery circuit (11) can be driven by means of an electric motor (35).

22. Drive unit according to Claim 1, **characterized in that** the working medium in the heat recovery circuit (11) can be conveyed by means of the pump (17) to a valve unit (36), from which the two parallel branches (11 a, 11 b) emanate, and **in that** by means of the valve unit (36), independently of the available heat supply, two working-medium mass streams into the two parallel branches (11 a, 11 b) can be generated and, moreover, these can be regulated independently of one another and of the rotational speed of the internal combustion engine or of the electric motor.

23. Drive unit according to Claims 21 and 22, **characterized in that**, in the case of an electromotive drive of the pump (17), the valve unit (36) is composed of a mixing valve (36') which in a regulated manner divides the working-medium mass stream fed in by the pump (17) into two mass substreams to be introduced into the two parallel branches (11 a, 11 b).

24. Drive unit according to Claims 20 and 22, **characterized in that**, in the case of a mechanical drive of the pump (17), from the internal combustion engine (1), the valve unit (36) is composed of two flow-regulating valves (37, 38), of a pressure accumulator (39) and of a pressure-limiting valve (40), working medium being conveyable into the pressure accumulator (39) by means of the pump (17) as a function of the rotational speed of the internal combustion engine (1), excess working medium being steerable into a balancing tank (41) by means of the pressure-limiting valve (40), and a working-medium substream being removable from the pressure accumulator (39) and being deliverable to the following parallel branch (11 a, 11 b) by means of each flow-regulating valve (37 and 38).

25. Drive unit according to Claim 23, **characterized in that** water or a water mixture is used as a working medium in the heat recovery circuit (11), material added to said water or water mixture being capable of influencing properties, such as, for example, corrosion protection and frost protection.

26. Drive unit according to Claim 1, **characterized in that** the expander (21) provided is a heat engine or turbine installation, by means of which the energy contained in the evaporated working medium can be converted at least partially into rotational energy which, in turn, can be used effectively as useful power.

27. Drive unit according to Claim 26, **characterized in that** the expander (21) is in useful power-decreasing operative connection with the internal combustion engine (1) or with a current-generating generator or with another assembly, this operative connection being made directly or indirectly via a drive train or a gear train to a shaft of the respective assembly which is to be driven.

## Revendications

1. Unité d'entraînement, en particulier d'un véhicule automobile, comprenant un moteur à combustion interne (1) à suralimentation à deux étages au moyen de deux turbocompresseurs à gaz d'échappement (2, 3), laquelle
- possède une alimentation en air de suralimentation comprenant un compresseur basse pression (2/2), un compresseur haute pression (3/2), un refroidisseur intermédiaire d'air de suralimentation (8) entre les compresseurs basse pression et haute pression (2/2, 3/2) ainsi qu'un refroidisseur principal d'air de suralimentation (9) monté en aval du compresseur haute pression (3/2), et en outre
- possède une évacuation de gaz d'échappement comprenant une turbine haute pression (3/1) et une turbine basse pression (2/1) et éventuellement un dispositif de post-traitement des gaz d'échappement (5) monté en aval de cette dernière (2/1) dans le système d'échappement (4), et de plus
- comprend une installation de refroidissement comprenant un circuit de refroidissement (10) et un circuit de récupération de chaleur (11) désaccouplé hydrauliquement de celui-ci,
**caractérisée**
en ce que le circuit de refroidissement (17) comporte deux circuits de refroidissement partiels (10/1, 10/2) accouplés ou désaccouplés hydrauliquement et un réfrigérant peut être circulé au moyen d'au moins une pompe (12) dans ceux-ci,
en ce qu'un échangeur de chaleur (13) pouvant être refroidi par de l'air ambiant est disposé dans le premier circuit de refroidissement partiel (10/1) et un échangeur de chaleur (16) supplémentaire pouvant être refroidi par de l'air ambiant est disposé dans le deuxième circuit de refroidissement partiel (10/2) et le refroidisseur principal d'air de suralimentation (9) ainsi que le refroidisseur intermédiaire d'air de suralimentation (8) sont disposés en aval de ceux-ci,
en ce qu'un fluide de travail peut être circulé avec augmentation de pression au moyen d'au moins une pompe (12) à l'intérieur du circuit de récupération de chaleur (11) et en l'occurrence une transition de phase de celui-ci de l'état liquide à l'état de vapeur et inversement peut être provoquée dans les échangeurs de chaleur (18, 19, 20), ce fluide de travail pouvant être transféré à l'état de vapeur après la pompe (17) de manière divisée en deux flux partiels parallèles dans une première branche parallèle (11a) dans un échangeur de chaleur RGE (18) traversé par les gaz d'échappement à recirculer et dans un échangeur de chaleur à gaz d'échappement (19) traversé par les gaz d'échappement produits dans la ligne d'échappement (4d) en aval de la turbine basse pression (2/1) dans une deuxième branche parallèle (11b), puis ce fluide de travail à l'état de vapeur pouvant être acheminé jusqu'à un détendeur (21) et pouvant être transformé en énergie mécanique utile au moyen de celui-ci, puis pouvant être guidé à travers un condenseur refroidi (20) et pouvant ensuite être introduit à nouveau à l'état de nouveau liquide, au moyen de la pompe (17), dans le circuit susmentionné.

2. Unité d'entraînement selon la revendication 1, **caractérisée en ce que** l'échangeur de chaleur RGE (18) peut être alimenté en gaz d'échappement à recirculer par le biais d'une conduite RGE (22), laquelle conduite RGE bifurque d'une portion de système d'échappement (4b) reliant les collecteurs (4a) du côté de la sortie du moteur à combustion interne (1) à l'entrée de la turbine haute pression (3/1).

3. Unité d'entraînement selon la revendication 2, **caractérisée en ce que** les gaz d'échappement à recirculer peuvent être acheminés jusqu'à l'échangeur de chaleur RGE (18) par le biais de la conduite RGE (22) et, après la traversée de celui-ci, peuvent être introduits dans la portion de conduite d'air de suralimentation (7d) qui réalise la liaison entre le refroidisseur principal d'air de suralimentation (9) et les entrées d'air (7e) du côté du moteur à combustion interne ou une conduite collectrice d'air de suralimentation (7f) de laquelle partent les entrées d'air (7e).

4. Unité d'entraînement selon la revendication 2, **caractérisée en ce qu'**au moins un échangeur de chaleur (44) supplémentaire est disposé dans la conduite RGE (22) en aval de l'échangeur de chaleur RGE (18), lequel échangeur de chaleur supplémentaire peut être traversé par le réfrigérant d'une branche (10/2g) supplémentaire s'étendant parallèlement aux branches (10/2d, 10/2c) du deuxième circuit de refroidissement partiel (10/2) et provoque par conséquent, après l'échangeur de chaleur RGE (18), un refroidissement supplémentaire des gaz d'échappement s'écoulant à travers la conduite RGE (22), et **en ce que** les gaz d'échappement à recirculer peuvent, après avoir traversé également l'échangeur de chaleur (44), être introduits par le biais de la conduite RGE (22) dans la portion de conduite d'air de suralimentation (7d) qui réalise la liaison entre le refroidisseur principal d'air de suralimentation (9) et les entrées d'air (7e) du côté du moteur à combustion interne ou une conduite collectrice d'air de suralimentation (7f) de laquelle bifurquent les entrées d'air (7e).

5. Unité d'entraînement selon la revendication 2, **caractérisée en ce que** les gaz d'échappement à recirculer peuvent être acheminés jusqu'à l'échangeur de chaleur RGE (18) par le biais de la conduite RGE (22) et, après la traversée de celui-ci, peuvent être recirculés jusqu'aux entrées d'air (7e) du moteur à combustion interne (1) ou jusqu'à une conduite collectrice d'air de suralimentation (7f) de laquelle partent les entrées d'air (7e).

6. Unité d'entraînement selon la revendication 1, **caractérisée en ce que** l'échangeur de chaleur à gaz d'échappement (19) est disposé de manière rapprochée de la turbine basse pression (2/1) dans la portion de ligne d'échappement (4d) se raccordant à cette dernière, en y utilisant la chaleur résiduelle des gaz d'échappement sortant de ladite turbine (2/1).

7. Unité d'entraînement selon la revendication 1, **caractérisée en ce que** l'échangeur de chaleur à gaz d'échappement (19) est disposé dans la portion de ligne d'échappement (4d) se raccordant à la sortie de la turbine basse pression (2/1), en y utilisant en aval d'un dispositif de post-traitement des gaz d'échappement (5) la chaleur résiduelle des gaz d'échappement sortant de celui-ci après l'avoir traversé.

8. Unité d'entraînement selon la revendication 7, **caractérisée en ce que** le dispositif de post-traitement des gaz d'échappement (5) et l'échangeur de chaleur à gaz d'échappement (19) sont disposés directement l'un derrière l'autre dans la portion de ligne d'échappement (4d).

9. Unité d'entraînement selon la revendication 7, **caractérisée en ce que** l'échangeur de chaleur à gaz d'échappement (19) est disposé après le dispositif de post-traitement des gaz d'échappement (5) de manière quelque peu espacée de celui-ci dans la portion de ligne d'échappement (4d).

10. Unité d'entraînement selon la revendication 7, **caractérisée en ce que** le dispositif de post-traitement des gaz d'échappement (5) est constitué de plusieurs modules de post-traitement des gaz d'échappement (5a) qui sont intégrés dans un silencieux (25) et qui s'y étendent entre une chambre d'entrée de gaz d'échappement (32) et une chambre de sortie de gaz d'échappement (31), **en ce que** les gaz d'échappement peuvent être acheminés jusqu'à la chambre d'entrée de gaz d'échappement (32) par le biais d'une tubulure d'entrée (33) qui forme une partie de la portion de ligne d'échappement (4b) se raccordant à la sortie de la turbine basse pression (2/1), **en ce qu'**après la traversée des modules de post-traitement des gaz d'échappement (5a), les gaz d'échappement purifiés provenant de la chambre de sortie de gaz d'échappement (32) peuvent être évacués par le biais d'un tuyau d'extrémité (34) hors du silencieux (25), et **en ce que** l'échangeur de chaleur à gaz d'échappement (19) est disposé soit à l'intérieur soit à l'extérieur du silencieux (25).

11. Unité d'entraînement selon la revendication 10, **caractérisée en ce que** l'échangeur de chaleur à gaz d'échappement (19) est fixé extérieurement au silencieux (25) et les gaz d'échappement peuvent être acheminés du côté de l'entrée jusqu'à celui-ci (19) par le biais du tuyau d'extrémité (34).

12. Unité d'entraînement selon la revendication 10, **caractérisée en ce que** l'échangeur de chaleur à gaz d'échappement (19) est disposé à l'intérieur du silencieux (25) et y est disposé à l'intérieur de son espace d'entrée de gaz d'échappement (32) et les gaz d'échappement peuvent être acheminés du côté de l'entrée jusqu'à celui-ci (19) par le biais du tuyau d'extrémité (34).

13. Unité d'entraînement selon la revendication 10, **caractérisée en ce que** l'échangeur de chaleur à gaz d'échappement (19) est disposé à l'intérieur du silencieux (25) et y est disposé à l'intérieur de sa chambre de sortie de gaz d'échappement (31), et **en ce que** les gaz d'échappement peuvent, après la traversée de l'échangeur de chaleur à gaz d'échappement (19), être évacués hors du silencieux (23) par le biais du tuyau d'extrémité (34).

14. Unité d'entraînement selon la revendication 1, **caractérisée en ce que** le condenseur (20) est monté, en vue de son refroidissement, soit dans le premier soit dans le deuxième circuit de refroidissement partiel (10/1) ou (10/2), et de telle sorte que le réfrigérant respectivement circulé dans celui-ci puisse être utilisé pour le refroidissement et la liquéfaction du fluide de travail du circuit de récupération de chaleur (11) traversant également le condenseur (20).

15. Unité d'entraînement selon la revendication 14, **caractérisée en ce que** le condenseur (20) est disposé dans la portion de conduite (10/2e) du deuxième circuit de refroidissement partiel (10/2), qui relie,
- en cas de montage en série, du côté du réfrigérant, du refroidisseur principal d'air de suralimentation (9) et du refroidisseur intermédiaire d'air de suralimentation (8), la sortie de celui-ci ou,
- en cas de montage en parallèle, du côté du réfrigérant, du refroidisseur principal d'air de suralimentation (9) et du refroidisseur intermédiaire d'air de suralimentation (8), leurs deux sorties de manière réunie,
soit à l'entrée de la pompe (12) soit à un point d'introduction donné avant celle-ci du côté aspiration, dans la portion de conduite (10/1 b) du premier circuit de refroidissement partiel (10) reliant la sortie de l'échangeur de chaleur (13) à la pompe (12).

16. Unité d'entraînement selon la revendication 14, **caractérisée en ce que** le condenseur (20) est disposé dans la portion de conduite (10/1b) du premier circuit de refroidissement partiel (10/1) qui relie la sortie de l'échangeur de chaleur (13) à l'entrée de la pompe (12).

17. Unité d'entraînement selon la revendication 16, **caractérisée en ce que**, lorsque le condenseur (20) est monté dans la portion de conduite (10/1b) du premier circuit de refroidissement partiel (10/1), le deuxième circuit de refroidissement partiel (10/2) bifurque en aval de la pompe (12), par sa portion de conduite (10/2a), de la portion de conduite (10/1b) conduisant jusqu'au moteur à combustion interne (1) et débouche, par sa portion de conduite (10/2e), à nouveau dans la partie de la portion de conduite (10/1b) du premier circuit partiel (10/1) qui relie la sortie du condenseur (20) à la pompe (12).

18. Unité d'entraînement selon la revendication 1, **caractérisée en ce que** de l'air comprimé peut être acheminé jusqu'au condenseur (20) en tant que réfrigérant, lequel air comprimé peut être produit au moyen d'un compresseur ou d'une soufflante (23) aspirant de l'air de l'atmosphère, lequel compresseur ou laquelle soufflante peut être entraîné(e) soit à partir du moteur à combustion interne (1) par le biais d'un train d'engrenage ou d'une transmission correspondant(e) soit, en variante à ceci, au moyen d'un moteur électrique.

19. Unité d'entraînement selon la revendication 18, **caractérisée en ce qu'**au moins un échangeur de chaleur (42, 43) supplémentaire pouvant être traversé par de l'air est disposé dans la conduite d'alimentation (24) en amont du condenseur (20) et/ou en aval de ce dernier dans une conduite, à l'aide duquel échangeur de chaleur un effet de refroidissement supplémentaire peut être obtenu au moyen de l'air comprimé.

20. Unité d'entraînement selon la revendication 1, **caractérisée en ce que** la pompe (17) du circuit de récupération de chaleur (11) peut être entraînée mécaniquement à partir du moteur à combustion interne (1).

21. Unité d'entraînement selon la revendication 1, **caractérisée en ce que** la pompe (17) du circuit de récupération de chaleur (11) peut être entraînée au moyen d'un moteur électrique (35).

22. Unité d'entraînement selon la revendication 1, **caractérisée en ce que** le fluide de travail dans le circuit de récupération de chaleur (11) peut être refoulé au moyen de la pompe (17) jusqu'à une unité de soupape (36), de laquelle partent les deux branches parallèles (11a, 11 b), et **en ce qu'**au moyen de l'unité de soupape (36), indépendamment de la chaleur fournie à disposition, deux flux massiques de fluide de travail peuvent être générés dans les deux branches parallèles (11 a, 11 b) et ceux-ci peuvent en outre être régulés indépendamment l'un de l'autre ainsi que du régime du moteur à combustion interne ou du moteur électrique.

23. Unité d'entraînement selon les revendications 21 et 22, **caractérisée en ce qu'**en cas d'entraînement électromotorisé de la pompe (17), l'unité de soupape (36) est constituée d'une soupape de mélange (36') qui divise le flux massique de fluide de travail réglé par la pompe (17), de manière régulée, en deux flux massiques partiels à introduire dans les deux branches parallèles (11 a, 11 b).

24. Unité d'entraînement selon les revendications 20 et 22, **caractérisée en ce qu'**en cas d'entraînement mécanique de la pompe (17) à partir du moteur à combustion interne (1), l'unité de soupape (36) est constituée de deux soupapes de régulation de débit (37, 38), d'un accumulateur de pression (39) et d'une soupape de limitation de pression (40), le fluide de travail pouvant être refoulé dans l'accumulateur de pression (39) au moyen de la pompe (17) en fonction du régime du moteur à combustion interne (1), le fluide de travail excédentaire pouvant être déchargé dans un réservoir de compensation (41) au moyen de la soupape de limitation de pression (40) et, au moyen de chaque soupape de régulation de débit (37 ou 38), un flux partiel de fluide de travail pouvant être prélevé de l'accumulateur de pression (39) et pouvant être acheminé jusqu'à la branche parallèle adjacente (11 a, 11 b).

25. Unité d'entraînement selon la revendication 23, **caractérisée en ce que** de l'eau ou un mélange aqueux est utilisé(e) en tant que fluide de travail dans le circuit de récupération de chaleur (11), la dernière substance ajoutée pouvant influencer des propriétés telles que la protection contre la corrosion et la protection contre le gel.

26. Unité d'entraînement selon la revendication 1, **caractérisée en ce qu'**il est prévu en tant que détendeur (21) un moteur thermique ou une installation de turbine avec lequel/laquelle l'énergie contenue dans le fluide de travail évaporé peut être transformée au moins partiellement en énergie de rotation qui peut pour sa part être utilisée efficacement en tant que puissance utile.

27. Unité d'entraînement selon la revendication 26, **caractérisée en ce que** le détendeur (21) est en liaison fonctionnelle diminuant la puissance utile avec le moteur à combustion interne (1) ou un générateur produisant du courant ou un autre ensemble, cette liaison fonctionnelle étant réalisée, directement ou indirectement par le biais d'une transmission ou d'un train d'engrenage, avec un arbre à entraîner de l'ensemble concerné.
